(19) Europäisches Patentamt
European Patent Office
Office européen des brevets

(11) **EP 3 315 948 B1**

(12) **EUROPÄISCHE PATENTSCHRIFT**

(45) Veröffentlichungstag und Bekanntmachung des Hinweises auf die Patenterteilung:
**04.09.2019 Patentblatt 2019/36**

(51) Int Cl.:
**G01N 21/41** *(2006.01)* **G01M 11/00** *(2006.01)*
**G02B 6/036** *(2006.01)*

(21) Anmeldenummer: **16195864.0**

(22) Anmeldetag: **26.10.2016**

(54) **VERFAHREN ZUR ERMITTLUNG DES BRECHZAHLPROFILS EINES ZYLINDERFÖRMIGEN OPTISCHEN GEGENSTANDES**

METHOD FOR DETERMINING THE REFRACTIVE INDEX PROFILE OF A CYLINDRICAL OPTICAL ELEMENT

PROCÉDÉ DE DÉTERMINATION DE PROFIL D'INDICE DE RÉFRACTION D'UN OBJET OPTIQUE CYLINDRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.05.2018 Patentblatt 2018/18**

(73) Patentinhaber: **Heraeus Quarzglas GmbH & Co. KG**
**63450 Hanau (DE)**

(72) Erfinder:
• **SCHMITT, Maximilian**
**64807 Dieburg (DE)**
• **KÜHN, Bodo**
**63571 Gelnhausen (DE)**

(74) Vertreter: **Staudt, Armin Walter**
**Sandeldamm 24a**
**63450 Hanau (DE)**

(56) Entgegenhaltungen:
**US-A- 4 515 475    US-A- 4 744 654**
**US-A- 5 078 488    US-A1- 2010 245 805**

• **MICHAEL R HUTSEL AND THOMAS K GAYLORD: "Concurrent three-dimensional characterization of the refractive-index and residual-stress distributions in optical fibers", APPLIED OPTICS, OPTICAL SOCIETY OF AMERICA, WASHINGTON, DC; US, Bd. 51, Nr. 22, 1. August 2012 (2012-08-01), Seiten 5442-5452, XP001577560, ISSN: 0003-6935, DOI: 10.1364/AO.51.005442 [gefunden am 2012-07-27]**
• **FLEMING S ET AL: "Nondestructive Measurement for Arbitrary RIP Distribution of Optical Fiber Preforms", JOURNAL OF LIGHTWAVE TECHNOLOGY, IEEE SERVICE CENTER, NEW YORK, NY, US, Bd. 22, Nr. 2, 1. Februar 2004 (2004-02-01), Seiten 478-486, XP011109863, ISSN: 0733-8724, DOI: 10.1109/JLT.2004.824464**

**Beschreibung**

Technischer Hintergrund

Die Erfindung betrifft ein Verfahren zur Ermittlung eines radialen Brechzahlprofils eines zylinderförmigen optischen Gegenstandes, insbesondere einer Vorform für eine optische Faser, der eine Zylinder-Längsachse aufweist, um die radialsymmetrisch mindestens eine Schicht k mit einem Schichtradius $r_k$ und mit einer Schichtbrechzahl $n_k$ verläuft, wobei eine Ablenkwinkelverteilung $\Psi(y)$ gemessen und daraus anhand eines Modells das Brechzahlprofil rekonstruiert wird, wobei der Ablenkwinkel "$\Psi(y)$" definiert ist, als der Winkel zwischen einem Austrittsstrahl aus dem optischen Gegenstand, in der Ebene senkrecht zur Längsachse umfassend den Eintrittsstrahl und den Austrittsstrahl, und wobei "y" definiert ist als der senkrechte Abstand, in der Ebene senkrecht zur Längsachse umfassend den Eintrittsstrahl und den Austrittsstrahl, der zwischen dem Eintrittspunkt des Eintrittsstrahls in den optischen Gegenstand und einer Linie parallel zum Eintrittsstrahl, die durch die Längsachse läuft.

Derartige zylinderförmige optische Gegenstände sind beispielsweise Faser-Vorformen, optische Fasern, Lichtleiter oder Zylinderlinsen. Eine der wichtigen Eigenschaften derartiger Gegenstände ist ihre Brechzahl (der Brechungsindex) und dessen radiale Brechzahlverteilung, die im Folgenden auch als "Brechzahlprofil" bezeichnet wird. So bestimmt beispielsweise das Brechzahlprofil der FaserVorform die Wellenleitereigenschaften der daraus gezogenen optischen Faser. Die hier maßgeblichen optischen Gegenstände haben ein homogenes oder ein stufenförmiges Brechzahlprofil. Es handelt sich insbesondere um optische Vorformen mit Stufenindexprofil, bei denen ein Kern mit höherer Brechzahl von mindestens einer Mantelschicht mit niedrigerer Brechzahl umgeben ist.

Die Brechzahlverteilung kann aber nicht direkt gemessen werden; sie wird daher in der Regel indirekt als Ablenkung oder Interferenz eines Lichtstrahls ermittelt, mit dem ein Volumenbereich des optischen Elements durchleuchtet wird, wobei das schrittweise Durchleuchten im Folgenden auch als "Scannen" bezeichnet wird. Aus der Interferenz oder der Ablenkung des austretenden Lichtstrahls bezogen auf die Strahlrichtung an der Strahleintrittsstelle kann auf die eigentliche Ursache zurückgerechnet werden, also auf die räumliche Brechzahlverteilung im optischen Element. Die Schar der beim Scannen des Lichtstrahls quer zur Zylinder-Längsachse (in y-Richtung) gemessenen Ablenkungswinkel wird hier auch als "Ablenkwinkelverteilung" $\Psi(y)$ bezeichnet. Für radialsymmetrische Gegenstände mit einer Stufenindexverteilung des Brechungsindex ist sie anhand folgender Formel (1) mathematisch beschreibbar:

$$\Psi_m(x) = \begin{cases} 2 \cdot \sum_{k=1}^{m} \left[ \arcsin\left(\frac{y}{r_k} \cdot \frac{n_0}{n_{k\,1}}\right) - \arcsin\left(\frac{y}{r_k} \cdot \frac{n_0}{n_k}\right) \right], \\ \qquad\qquad\qquad \text{für} \quad r_{m\,1} \cdot \frac{n_{m+1}}{n_0} \,, \; r_{m\,1} \cdot \frac{n_m}{n_0} \le |y| < r_m \cdot \frac{n_m}{n_0} \\ 2 \cdot \sum_{k=1}^{m-1} \left[ \arcsin\left(\frac{y}{r_k} \cdot \frac{n_0}{n_{k\,1}}\right) - \arcsin\left(\frac{y}{r_k} \cdot \frac{n_0}{n_k}\right) \right] + 2 \cdot \arccos\left(\frac{y}{r_m} \cdot \frac{n_0}{n_{m\,1}}\right), \\ \qquad\qquad\qquad \text{für} \quad r_{m+1} \cdot \frac{n_{m+1}}{n_0} \le |y| < r_{m+1} \cdot \frac{n_m}{n_0} \\ 0\,, \qquad\qquad\qquad \text{für} \quad |y| \ge r_1 \end{cases} \qquad (1)$$

Dabei bedeuten:

m     Anzahl der Schichten des Gegenstandes
$n_0$     Brechungsindex des umliegenden Mediums,
$n_k$     Brechungsindex der k-ten Schicht
$r_k$     Radius der k-ten Schicht

Eine bekannte mathematische Methode, um aus der auf Messdaten beruhenden "Ablenkwinkelverteilung" $\Psi(y)$ gemäß Gleichung (1) das Brechzahlprofil zu berechnen, beruht auf der sogenannten "Abel-Transformation".

$$n[r(y)] = n_0 \cdot \exp\left( \frac{1}{\pi} \cdot \int_y^R \frac{\Psi(t)\mathrm{d}t}{\sqrt{t^2 - y^2}} \right) \qquad (2)$$

wobei gilt:

r kürzester Abstand von der Zylinder-Längsachse des Gegenstandes zum Strahlenverlauf, nämlich:

$$r(y) = y \cdot \exp\left(-\frac{1}{\pi} \cdot \int_y^R \frac{\Psi(t)\mathrm{d}t}{\sqrt{t^2 - y^2}}\right) \qquad (3)$$

R Referenzpunkt für die Brechzahlverteilung, nämlich die radiale Position der Referenzbrechzahl (Atmosphäre oder Indexflüssigkeit außerhalb des Gegenstandes), und

$\Psi$ ist substituiert durch $\delta\Phi/\delta t$

Stand der Technik

In der US 4,227,806 A ist eine Methode zur zerstörungsfreien Bestimmung von Parametern einer Vorform für eine optische Faser beschrieben. Dabei wird die Vorform mittels eines transversal in die Kern-Mantelstruktur eintretenden Laserstrahls abgescannt und der Ablenkungswinkel des austretenden Strahls gemessen, und anschließend mit theoretischen oder empirischen Ablenkwinkelverteilungen von Vorformen verglichen, deren Brechzahlverteilung bekannt ist. Bei der Messung befindet sich die Vorform in einem Bad mit Immersionsflüssigkeit, um die Ablenkwinkel nicht zu groß werden zu lassen.

Die US 4,441,811 A beschreibt ein Verfahren und eine Vorrichtung zur Bestimmung der Brechzahlverteilung einer zylindrischen, transparenten optischen Vorform. Auch hier wird die in Immersionsflüssigkeit eingelegte Vorform von einem transversal eintretenden Lichtstrahl abgescannt, der senkrecht zur optischen Achse verläuft. Dabei wird der Lichtstrahl durch das Glas der Vorform abgelenkt und mit einer Optik auf einen positionierbaren Detektor abgebildet. Aus der Ablenkwinkelverteilung wird das Brechzahlprofil mittels numerischer Integration berechnet. Auch andere Vorform-Parameter, wie Vorform-Durchmesser, KernDurchmesser, Exzentrizität, und der CCDR-Wert (Cladding to Core Diameter Ratio) können daraus bestimmt werden.

Methoden zur Rekonstruktion des Brechzahlprofils aus der transversal gemessenen Ablenkwinkelverteilung unter Einsatz der Abel-Transformation sind auch in der US 4,744,654 A, der US 5,078,488 A, und in der US 4,515,475 A zu entnehmen.

Auch die beiden folgenden Fachartikel beschreiben solche Verfahren: MICHAEL R. HUTSEL AND THOMAS K. GAYLORD "Concurrent three-dimensional characterization of the refractive-index and residual-stress distributions in optical fibers", APPLIED OPTICS, OPTICAL SOCIETY OF AMERICA, WASHINGTON, DC; US, Bd. 51, Nr. 22, 1. August 2012 (2012-08-01), Seiten 5442-5452 (ISSN: 0003-6935, DOI: 10.1364/A0.51.005442). FLEMING S. ET AL: "Nondestructive Measurement for Arbitrary RIP Distribution of Optical Fiber Preforms", JOURNAL OF LIGHTWAVE TECHNOLOGY, IEEE SERVICE CENTER, NEW YORK, NY, US, Bd. 22, Nr. 2, 1. Februar 2004 (2004-02-01), Seiten 478-486 (ISSN: 0733-8724, DOI: 10.1109/JLT.2004.824464).

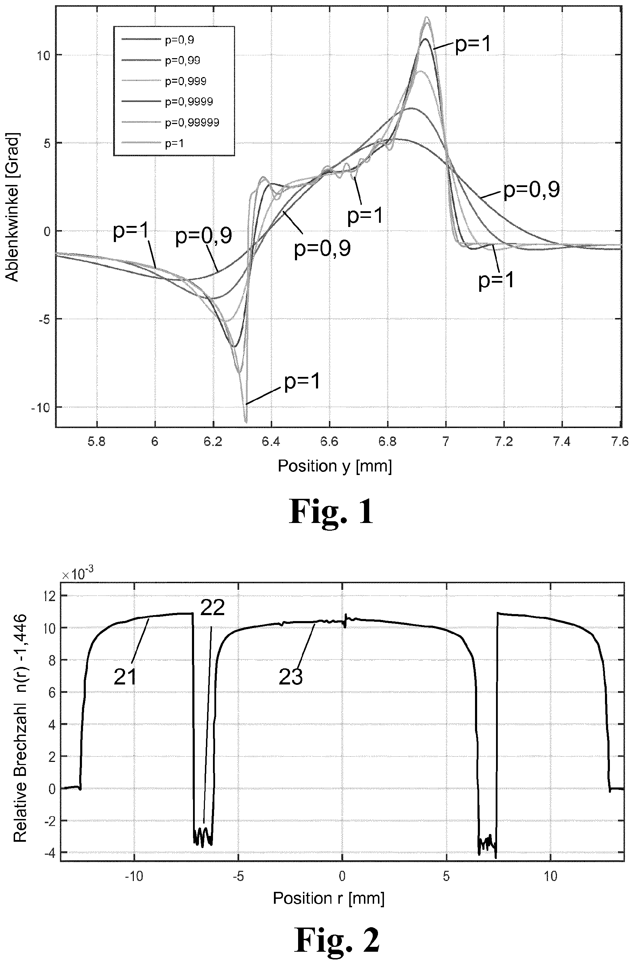

Die einfache Rekonstruktion des Brechzahlprofils n(r) aus der transversal gemessenen Ablenkwinkelverteilung unter Einsatz der Abel-Transformation nach Gleichung (2) führt aber zu nicht vernachlässigbaren Unterschieden zum realen Brechzahlprofil. Ursache dafür ist ein bekannter Messartefakt, der bei Brechzahl-Diskontinuitäten an Grenzflächen zwischen dem transparenten Gegenstand und der Umgebung beziehungsweise an der Grenzfläche zwischen radialen Brechzahlstufen auftritt. Wie anhand von Figur 2 näher erläutert, kommt es bei Messungen an den Grenzflächen von Brechzahlsprüngen von niedriger zu hoher Brechzahl (bei Betrachtung von außen nach innen) in einem grenzflächennahen Volumenbereich des optischen Gegenstandes zu einem prinzipiell nicht messbaren Bereich. Typische Unterschiede und Fehler des rekonstruierten Brechzahlprofils beispielsweise von Stufenindex-Profilen sind Abrundungen des Profilverlaufs und zu geringe Stufenhöhen. Mit der Problematik des nicht messbaren Bereichs befasst sich der Fachartikel von Werner J. Glantschnig mit dem Titel: "Index profile reconstruction of fiber preforms from data containing a surface refraction component"; Applied Optics 29 (1990), Juli, Nr. 19, 2899-2907. Es wird vorgeschlagen, durch Extrapolieren basierend auf den inneren drei Messpunkten der Ablenkwinkelverteilung unmittelbar vor der Diskontinuität, die eigentlich fehlenden Ablenkwinkel im nicht-messbaren Bereich quasi aufzufüllen.

Die auf drei Messpunkten basierende Extrapolation führt jedoch nicht in allen Fällen zu guten Ergebnissen. Zur Lösung dieses Problems schlägt die US 8,013,985 B2 (Offenlegungsschrift: US 2010/245805 A1) eine Abwandlung dieser Rekonstruktions-Methode vor, indem zur Messung des Brechungsindexprofils eines transparenten zylindrischen Gegenstandes wie einer Faservorform, eine Strahlablenkwinkelfunktion gemessen und das Brechungsindexprofil aus den gemessenen Daten auf Grundlage der paraxialen Strahltheorie mathematisch und durch Anlegen einer inversen Abel-Transformation an die Ablenkfunktion rekonstruiert wird. Bei der Messung ist die zu vermessende Faservorform zwischen einem Laser und einer Transformationslinse angeordnet. Die Vorform hat eine Mittelachse und eine Zylindermantelfläche, die einen Vorformradius R definieren. Der auf die Zylindermantelfläche in der Höhe x auftreffende Eintrittsstrahl wird in der Vorform abgelenkt und tritt als Austrittsstrahl in einem anderen Winkel wieder aus, was mittels eines Photodetektors detektiert und von einer Steuerung verarbeitet wird. Der Ablenkwinkel ist als Winkel zwischen dem Austrittsstrahl und dem Eintrittsstrahl definiert und er wird durch Variation der Laserstrahlhöhe x verändert und die Ablenkwinkelverteilung $\psi_m$ gemessen. An die gemessene Ablenkwinkelverteilung wird mittels eines numerischen Modells ein geschätztes Brechungsindexprofil angepasst, das für das tatsächliche Brechungsindexprofil repräsentativ ist.

Dazu wird eine Symmetriekorrelation an der gemessenen Ablenkfunktion durchgeführt, um eine Mittelkoordinate zu definieren. Die gemessene Ablenkfunktion wird in zwei Hälften um die Mittelkoordinate aufgeteilt, und für jede der beiden Hälften wird ein Brechungsindexhalbprofil berechnet, um für jede Hälfte ein resultierendes geschätztes Indexprofil zu erhalten. Die relevanten Parameter für die Brechungsindexprofilberechnung sind der Vorformradius R und der Brechungsindex der Vorform. Eine Zielwinkelverteilung $\psi_t$ wird an die gemessene Ablenkfunktion iterativ angepasst, wobei Messpunkte in der Nähe einer Grenzfläche (Brechzahl-Diskontinuität) innerhalb oder am Rand der Vorform ausgespart werden.. Diese Methode der rechnerischen iterativen Anpassung mathematischer Funktionen wird im Folgenden auch als "Fitting" oder als "Anfitten" bezeichnet. Gemäß der US 8,013,985 B2 erfolgt das Anfitten dadurch, dass in obige Gleichung (1) (allerdings ohne Berücksichtigung des in der zweiten Zeile der Gleichung angegebenen arccos-Anteils) noch unbekannte Parameter des Brechzahlprofils eingesetzt werden, nämlich ein Wert für den Vorform-Radius R (beziehungsweise für den Radius der Brechzahl-Diskontinuität) sowie noch unbekannte Brechzahlwerte $\eta_i$, wobei diese noch unbekannten Parameter so variiert werden, dass die dabei erhaltene Zielwinkelverteilung $\psi_t$ am besten zu der gemessenen Ablenkwinkelverteilung $\psi_m$ passt. Die Zielwinkelverteilung $\psi_t$ wird somit mit den noch unbekannten Parametern R und $\eta_i$ an die gemessene Ablenkwinkelverteilung $\psi_m$ angepasst (angefittet).

Auf Basis der so angepassten, simulierten Zielwinkelverteilung $\psi_t$ wird ein rekonstruiertes Brechzahlprofil $\eta^*_i(r)$ berechnet. Dieses reicht bis zum rekonstruierten Vorform-Radius R*, der größer ist als der Radius $R_{FIT}$ des inneren Gegenstands-Bereichs. Für zylindrische Gegenstände, deren Brechzahlprofil mindestens eine Diskontinuität aufweist, wird die Methode für die verschiedenen Gegenstands-Bereiche, die jeweils durch die Diskontinuität definiert sind, angewandt.

Technische Aufgabenstellung

Bei dieser Methode wird an die gemessene Ablenkwinkelverteilung $\psi_m$ eine simulierte Zielwinkelverteilung $\psi_t$ durch Anfitten noch unbekannter Parameter angepasst und aus der simulierten Zielwinkelverteilung eine radiale Brechzahlverteilung berechnet, die bis an die Grenzfläche einer weiter außen liegenden Diskontinuität des Brechzahlprofils reichen kann.

Die Erfassung eines vollständigen Brechzahlprofils eines optischen Gegenstandes, der mehrere radial durch eine Brechzahl-Diskontinuität getrennte Schichten aufweist, erfordert daher eine sukzessive Messung, Berechnung und Abschätzung der durch die jeweilige Diskontinuität definierten Schichten von außen nach innen. Sowohl beim Anfitten der simulierten Zielwinkelverteilung $\psi_t$ als auch bei deren Umrechnung in das rekonstruierte Brechzahlprofil $\eta^*_i(r)$ können sich systematische und numerische Fehler ergeben.

Darüber hinaus hat es sich gezeigt, dass der Vergleich von Ablenkwinkelverteilungen, nämlich einer Simulierten und einer Gemessenen nicht besonders anschaulich ist und ein hohes Maß an Expertise zur Feststellung erfordert, ob und gegebenenfalls wie ein Fitting optimal ist oder ob und gegebenenfalls welcher Wert einer Nachkorrektur oder weiteren Variation bedarf.

Der Erfindung liegt daher die Aufgabe zugrunde, eine Methode zur Ermittlung des Brechzahlprofils eines zylinderförmigen transparenten Gegenstandes mit radialsymmetrischer oder annähernd radialsymmetrischer Brechzahlverteilung anzugeben, das hinsichtlich Nachvollziehbarkeit, Genauigkeit und Reproduzierbarkeit verbessert ist.

Zusammenfassung der Erfindung

Diese Aufgabe wird ausgehend von dem eingangs genannten Verfahren erfindungsgemäß dadurch gelöst, dass das Modell folgende Maßnahmen umfasst:

(a) Aufbereitung der gemessenen Ablenkwinkelverteilung $\Psi(y)$, umfassend eine Extremwertbestimmung der Ablenkwinkelverteilung, wobei eine aufbereitete Ablenkwinkelverteilung $\Psi'(y)$ erhalten wird,

(b) Transformation der aufbereiteten Ablenkwinkelverteilung $\Psi'(y)$ zu einem aufbereiteten Brechzahlprofil n'(r),

(c) Auswertung des aufbereiteten Brechzahlprofils n'(r) zur Festlegung von Orientierungswerten, umfassend einen Orientierungswert $r^*_k$ für den Schichtradius und einen Orientierungswert $n^*_k$ für die Schichtbrechzahl eines hypothetischen Brechzahlprofils n*(r),

(d) Erzeugen einer simulierten Ablenkwinkelverteilung $\Psi''(y)$ auf Basis des hypothetischen Brechzahlprofils n*(r) mit

den Orientierungswerten $r^*_k$ und $n^*_k$, und Transformation dieser Ablenkwinkelverteilung in ein simuliertes Brechzahlprofil n''(r), und

(e) Anfitten des simulierten Brechzahlprofils n''(r) an das aufbereitete Brechzahlprofil n'(r) durch iteratives Anpassen der Parameter $r^*_k$ und $n^*_k$ bei Maßnahme (d), wobei ein angefittetes, simuliertes Brechzahlprofil n''(r)$_{fit}$ erhalten wird, das durch angepasste Parameter $r^*_{k,fit}$ und $n^*_{k,fit}$ definiert ist, und

(f) Erhalten des Brechzahlprofils als das hypothetische Brechzahlprofil mit den angepassten Parametern $r^*_{k,fit}$ und $n^*_{k,fit}$.

Die Ablenkwinkelverteilung $\Psi(y)$ wird in der Regel mittels eines sogenannten Preform-Analyzers ermittelt. Dabei wird die Vorform in eine Messzelle mit einer Immersionsflüssigkeit eingelegt und die Ablenkwinkelverteilung gemessen.

Aufbereitete Ablenkwinkelverteilung $\Psi'(y)$

Beim erfindungsgemäßen Verfahren wird aus der so gemessenen Ablenkwinkelverteilung $\Psi(y)$ in einem ersten Schritt eine aufbereitete Ablenkwinkelverteilung $\Psi'(y)$ erzeugt. Zu diesem Zweck wird die gemessene Ablenkwinkelverteilung $\Psi(y)$ einer Analyse und Bestimmung von Extremwerten unterzogen. Derartige Extremwerte treten beispielsweise im Bereich eines Brechzahlsprungs auf, wie etwa an einer inneren Grenzfläche oder an der Zylindermantelfläche des optischen Gegenstandes. Der Einfachheit halber beziehen sich die folgenden Erläuterungen auf eine optische Vorform mit Stufenindexprofil, die mindestens zwei Schichten und demgemäß einen oder mehrere derartige Brechzahlsprünge aufweist, darunter die Zylindermantelfläche der Vorform.

Die Ablenkwinkelverteilung radialsymmetrischer Gegenstände zeigt mindestens zwei Extremwerte, die durch den Brechzahlsprung an ein- und derselben Schicht k bewirkt werden. Bei der Extremwertbestimmung werden die Positionen der Extremwerte $y_{k,max}$ der gemessenen Ablenkwinkelverteilung bestimmt. Bei den Positionen handelt es sich bereits näherungsweise um die beiderseitigen Kanten (numerisch definiert durch den Radius der betreffenden Schicht), an der der Brechzahlsprung auftritt. Diese Extremwertbestimmung wird im Folgenden auch als "Kantenfindung" bezeichnet.

Dabei ist zu beachten, dass sich die Messdaten der Ablenkwinkelverteilung auf ein kartesisches Koordinatensystem beziehen und hier in Abhängigkeit von dessen y-Achse angegeben werden, wohingegen sich die Radien der Schichten in der Regel auf ein anderes Koordinatensystem (Radialsystem) beziehen und in Abhängigkeit vom Radius r angegeben werden. Im Falle geringer Brechzahlunterschiede und schwacher Brechung kann der Unterschied gering sein, so dass zwischen y- und r-Werten häufig nicht unterschieden wird, was in der Literatur als "Approximations-Methode", "Straight-Line-Approximation" oder "Keine-Brechung-Näherung" bezeichnet wird.

Bei der Kantenfindung soll möglichst vermieden werden, dass eine Kante aufgrund von Ausreißern oder Messwertrauschen fälschlicherweise vermutet wird. Es hat sich gezeigt, dass dafür eine Verfahrensweise besonders gut geeignet ist, bei der eine Glättung der gemessenen Ablenkwinkelverteilung mittels Spline-Funktionen unter Einsatz mehrerer unterschiedlicher Glättungsparameter erfolgt. Bei den Spline-Funktionen handelt es sich um mehrere zusammengesetzte Polynome höherer Ordnung. Durch iterative Anwendung schwächerer Glättungsparameter verschieben sich die jeweiligen Extrema nach und nach bei jeder Iteration in die Richtung der tatsächlichen Extrema.

Auf diese Weise wird bei der Kantenfindung bevorzugt ein innerster rechter Extremwert $y_{k,rechts}$ und ein innerster linker Extremwert $y_{k,links}$ ermittelt, die wie gesagt näherungsweise den entsprechenden Kanten der k-ten Schicht des Brechzahlprofils entsprechen. Dabei handelt es sich beispielsweise um die Außenkante des Kerns oder um die Außenkante einer Mantelschicht (jedoch unter der Maßgabe, dass die Brechungsindizes von außen nach innen zunehmen, sodass keine Totalreflexion auftritt, da gegebenenfalls die betreffende Kante in einem faktisch nicht messbaren Bereich liegen würde). Die so ermittelten rechten und linken Kanten sind besonders gut geeignet, den tatsächlichen Mittelpunkt der Vorform festzulegen.

Darüber hinaus umfasst die Aufbereitung der gemessenen Ablenkwinkelverteilung vorzugsweise eine Korrektur, bei der der Ursprung der Ablenkwinkelverteilung justiert wird.

Als Ursprung wird hier der Koordinatenursprung der Ablenkwinkelverteilung im kartesischen Koordinatensystem bezeichnet, durch den hindurch (bei y=0) die Zylinderlängsachse der Vorform verlaufen soll. Eine Verschiebung entlang der y-Achse kann auftreten, weil bei der Messung der Ablenkwinkelverteilung mittels Preform-Analyzer die y-Achse nur über die Geometrie der Messzelle festgelegt ist. Das Zentrum der Messzelle stimmt aber nicht zwangsläufig mit der Längsachse der Vorform überein.

Das Justieren des Ursprungs der Ablenkwinkelverteilung umfasst daher beispielsweise eine Verschiebung in Richtung der y-Achse des Koordinatensystems in die Mitte zwischen innerstem rechten Extremwert $y_{k,rechts}$ und innerster linkem Extremwert $y_{k,links}$.

Außerdem kann die gesamte Winkelverteilung einen Offset vom Koordinatenursprung mit einem Versatzbeitrag in Richtung der Vertikal-Achse aufweisen (im Koordinatensystem der Ablenkwinkelverteilung ist es die $\Psi$-Achse). Das Ermitteln eines Offsets erfolgt vorzugsweise dadurch, dass der Abstand zwischen der Null-Linie (y=0) des Koordinatensystems und einer Geraden ermittelt wird, die mittels Summe-kleinster-Quadrate-Methode an die Mitte zwischen innerstem rechtem Extremwert $y_{k,rechts}$ und innerstem linken Extremwert $y_{k,links}$ des Brechzahlprofils gefittet wird. Zum Eliminieren des Offsets wird die Ablenkwinkelverteilung um den so bestimmten Abstand in Richtung einer $\Psi$-Achse des Koordinatensystems verschoben.

Für das Fitten der Gerade muss nicht die gesamte Strecke zwischen den Kanten berücksichtigt werden, sondern bevorzugt wird eine kürzere Teilstrecke herangezogen, die weniger als 20% der Gesamtstrecke beträgt.

Bei einer alternativen, ebenfalls bevorzugten Verfahrensvariante zur Bestimmung des Offsets wird an die Mitte zwischen innerstem rechten Extremwert $y_{k,rechts}$ und innerstem linken Extremwert $y_{k,links}$ ein Polynom höherer Ordnung (beispielsweise 9. Ordnung) gefittet. Auch hier kann eine Teilstrecke zwischen den Kanten oder die Gesamtstrecke gewählt werden.

Bei einer weiteren alternativen und ebenfalls bevorzugten Verfahrensvariante zur Bestimmung des Offsets wird die Ablenkwinkelverteilung so verschoben, dass die Summe aller äquidistant gemessenen Ablenkwinkel gleich Null ist.

Ergebnis der Auswertung und Aufbereitung ist eine hinsichtlich ihres Ursprungs an den Koordinatenursprung angepasste, aufbereitete Ablenkwinkelverteilung $\Psi'(y)$.

Aufbereitetes Brechzahlprofils n'(r)

In einem nächsten Schritt wird aus der aufbereiteten Ablenkwinkelverteilung $\Psi'(y)$ durch Transformation ein Brechzahlprofil erzeugt, das hier als "aufbereitetes Brechzahlprofils n'(r)" bezeichnet wird. Die Erzeugung eines Brechzahlprofils aus der ursprünglich gemessenen Ablenkwinkelverteilung ist dafür nicht erforderlich.

Es hat es sich gezeigt, dass für diese Transformation, die beispielsweise anhand einer Abel-Transformation erfolgt, wie etwa der obigen Gleichung (2), die vorherige Anpassung des Ursprungs der Ablenkwinkelverteilung sehr hilfreich ist. Ohne Anpassung führen bereits kleine Abweichungen vom tatsächlichen Ursprung zu Fehlern bei der transformierten Brechzahlverteilung.

Dem aufbereiteten Brechzahlprofil n'(r) fehlen immer noch Brechzahl- und Radienwerte aus dem "nicht-messbaren Bereich", so dass es nicht das real zu erwartende Brechzahlprofil der Vorform wiedergibt. Jedoch stellt es eine anschauliche Orientierungshilfe dar, aus der sich in relativ eindeutiger Weise geeignete Orientierungswerte für ein "hypothetische Brechzahlprofil" n*(r) ableiten lassen, das Grundlage für den nachfolgenden Verfahrensschritt ist. Die abzuleitenden Orientierungswerte umfassen einen Orientierungswert $r^*_k$ für den Schichtradius und einen Orientierungswert $n^*_k$ für die Schichtbrechzahl des hypothetischen Brechzahlprofils n*(r). Insbesondere für die Brechzahl liegen häufig Erfahrungswerte und in Datenbanken niedergelegte Daten vor, die ergänzend zur Bestimmung der Brechzahl herangezogen werden können.

Im einfachsten Fall werden bei der Auswertung des aufbereiteten Brechzahlprofils n'(r) gemäß Maßnahme (c) die ermittelten Extremwerte $y_{k,rechts}$ und $y_{k,links}$ zur Festlegung des Orientierungswerts $r^*_k$ genutzt.

Dies ist jedoch, wie oben im Zusammenhang mit der Approximationsmethode erläutert, nur näherungsweise richtig. Bei einer besonders bevorzugten Verfahrensvariante werden daher die ermittelten Extremwerte $y_{k,rechts}$ und $y_{k,links}$ in Schichtradien $r_{k,rechts}$ beziehungsweise in $r_{k,links}$ umgerechnet und die berechneten Schichtradien zur Festlegung des Orientierungswertes $r^*_k$ genutzt.

Die Umrechnung der Extremwerte in den Schichtradius erfolgt dabei vorzugsweise anhand einer der folgenden Gleichungen (4) und (5):

$$r^*_k = n_0/n_{k-1^*}\, y_{k,max} \qquad\qquad (4)$$

$$r^*_k = n_0/n_{k^*}\, y_{k,max} \qquad\qquad (5)$$

mit:

| | |
|---|---|
| n0 | = Brechungsindex des umliegenden Mediums, |
| $n_{k-1}$ | = Brechungsindex der an Schicht k außen angrenzenden Schicht |
| $n_k$ | = Brechungsindex der Schicht k |
| $y_{k, max}$ | = Position des betragsmäßig größten Ablenkwinkels der Schicht k. |

Die Gleichung (4) gilt für den Fall, dass an der Grenzfläche bei $r_k$ keine Totalreflexion stattfindet. Andernfalls gilt die Gleichung (5).

Das hypothetische Brechzahlprofil beruht auf dem aufbereiteten Brechzahlprofil n'(r) und den aus diesem Profil abgeleiteten Orientierungswerten, die wiederum Schätzwerte zu Brechzahl und Radien aus dem "nicht-messbaren Bereich" beinhalten. Es gibt bereits das real zu erwartende Brechzahlprofil der Vorform wieder oder es kommt diesem Brechzahlprofil nahe.

Simuliertes Brechzahlprofil n"(r)

Aus dem hypothetischen Brechzahlprofil n*(r) wird im nächsten Verfahrensschritt eine simulierte Ablenkwinkelverteilung Ψ"(y) erzeugt. Für diese Umrechnung ist beispielsweise die eingangs genannte Gleichung (1) geeignet. Die simulierte Ablenkwinkelverteilung Ψ*(y) beruht somit auf der Annahme eines Brechzahlprofils der Vorform (nämlich dem hypothetischen Brechzahlprofil n*(r)), das sich wiederum nach Korrektur und Auswertung ursprünglicher Messwerte von einem aufbereiteten Brechzahlprofil n'(r) ableitet.

Durch Transformation der simulierten Ablenkwinkelverteilung Ψ"(y) - beispielsweise anhand obiger Gleichung (2) - wird wiederum ein simuliertes Brechzahlprofils n"(r) erhalten.

Somit wird über das Hilfskonstrukt des hypothetischen Brechzahlprofils n*(r) aus dem aufbereiteten Brechzahlprofil n'(r) durch Simulation ein simuliertes Brechzahlprofil n"(r) erhalten. Je ähnlicher das simulierte Brechzahlprofil n"(r) dem aufbereiteten Brechzahlprofil n'(r) ist, umso näher kommen die dem hypothetischen Brechzahlprofil n*(r) zugrunde liegenden Annahmen der Realität, also dem realen Brechzahlprofil n(r) der Vorform.

Reales, rekonstruiertes Brechzahlprofils n(r)

Im Idealfall, bei Übereinstimmung von simuliertem Brechzahlprofil n"(r) und aufbereitetem Brechzahlprofil n'(r) würde demnach das der Simulation zugrunde liegende hypothetische Brechzahlprofil n*(r) das reale Brechzahlprofil der Vorform wiedergeben.

In der Praxis ist die exakte Übereinstimmung nicht erreichbar. Durch iteratives Anfitten des simulierten Brechzahlprofils n"(r) an das aufbereitete Brechzahlprofil n'(r) ist jedoch eine hinreichend und beliebig genaue Anpassung erzielbar. Die Iteration beinhaltet mindestens einen Durchlauf der Simulation gemäß Verfahrensschritt (d). Ergebnis ist ein hinreichend genaues, angefittetes, simuliertes Brechzahlprofil $n''(r)_{fit}$, das durch bestmöglich oder ausreichend angepasste Parameter $r^*_{k,fit}$ und $n^*_{k,fit}$ definiert ist. Das genau dieser Simulation zugrunde liegende hypothetische Brechzahlprofil mit den angepassten Parametern $r^*_{k,fit}$ und $n^*_{k,fit}$ stellt somit gleichzeitig das rekonstruierte, reale Brechzahlprofil der Vorform dar.

Als mathematisches Kriterium dafür, ob ein ausreichend angefittetes, simuliertes Brechzahlprofil $n^*(r)_{fit}$ vorliegt, kann berechnet werden, ob die Abweichung zwischen simuliertem Brechzahlprofil n"(r) und aufbereitetem Brechzahlprofil n'(r) unterhalb eines vorgegeben Schwellwertes liegt. Die Berechung der Abweichung erfolgt vorzugsweise anhand der "Kleinsten absoluten Residuen" oder anhand der "Kleinste-Quadrate-Methode". Im Falle von äquidistanten Radien entsprechen die Absoluten Residuen sogenannten Ausgleichsflächen.

Dadurch, dass gemäß der Erfindung das Auffinden der optimierten Parameter $r^*_{k,fit}$ und $n^*_{k,fit}$ auf das Auffinden ausreichend angepasster (gefitteter) Profile auf Basis von Brechzahlprofilen erfolgt - und nicht auf der Ebene von Ablenkwinkelverteilungen - ergeben sich Vereinfachungen und Verbesserungen hinsichtlich Nachvollziehbarkeit, Genauigkeit und Reproduzierbarkeit der Messergebnisse.

Im Idealfall zeigt jede Schicht des optischen Gegenstandes die vorgegebene Schichtbrechzahl $n_k$ über den gesamten Schichtradius $r_k$. In der Realität gibt es aber Abweichungen davon; die Schichtbrechzahl $n_k$ kann um den Nominalwert schwanken und ihr Verlaufstrend kann vom konstanten Wert abweichen. Die Rekonstruktion des Brechzahlprofils anhand des erfindungsgemäßen Verfahrens setzt kein ideales Stufenprofil voraus; Abweichungen werden auf einen Mittelwert der realen Schicht-Brechzahl nivelliert. Dies gilt gleichermaßen für eine Schicht mit voreingestelltem Brechzahl-Gradienten.

Bei einer besonders bevorzugten Ausführungsform des erfindungsgemäßen Verfahrens erfolgt bei Maßnahme (d) ergänzend zum Anfitten des simulierten Brechzahlprofils n"(r) an das aufbereitete Brechzahlprofil n'(r) gemäß Verfahrensschritt (e), ein Anfitten der simulierten Ablenkwinkelverteilung Ψ*(y) an die aufbereitete Ablenkwinkelverteilung Ψ' (y) durch iteratives Anpassen der Parameter $r^*_k$ und $n^*_k$, wobei eine angefittete, simulierte Ablenkwinkelverteilung $Ψ'^*(y)_{fit}$ erhalten wird, die durch angepasste Parameter $r'^*_{k,fit}$ und $n'^*_{k,fit}$ definiert ist, und wobei das Brechzahlprofil gemäß Verfahrensschritt (f) erhalten wird, indem das angefittete, simulierte Brechzahlprofil $n^*(r)_{fit}$ mit einem Gewichtungsfaktor G mit der angefitteten, simulierten Ablenkwinkelverteilung $Ψ'^*(y)_{fit}$ mit einem Gewichtungsfaktor (1-G) kombiniert wird, wobei gilt $0 \leq G \leq 1$.

Zur Rekonstruktion des realen Brechzahlprofils n(r) werden hierbei gewichtete Parameter genutzt, die durch Betrachtung der Brechzahlebene aus dem angefitteten, simulierten Brechzahlprofil $n''(r)_{fit}$ einerseits, und durch Betrachtung der Winkelebene aufgrund der angefitteten, simulierten Ablenkwinkelverteilung $Ψ'^*(y)_{fit}$ andererseits erhalten werden. Dadurch werden zufällige Messwertschwankungen oder Umrechnungsfehler zusätzlich eliminiert und so bei der Rekonstruktion des realen Brechzahlprofils eine höhere Genauigkeit erzielt.

Die anhand der Rekonstruktion des realen Brechzahlprofils n(r) ermittelten Parameter, insbesondere die angepassten Parameter $r^*_{k,fit}$ und $n^*_{k,fit}$ werden vorzugsweise zur Anpassung eines Vorform-Fertigungsprozesses verwendet.

Ausführungsbeispiel

Nachfolgend wird die Erfindung anhand eines Ausführungsbeispiels und einer Zeichnung näher erläutert. In der Zeichnung zeigt im Einzelnen

**Figur 1:** einen Ausschnitt einer gemessenen Ablenkwinkelfunktion mit dazugehörigen Spline-Funktionen für verschiedene Glättungsparameter p,

**Figur 2:** eine Brechzahlverteilung, berechnet aus der gemessenen Ablenkwinkelverteilung (p=1) von Figur 1,

**Figur 3:** den Strahlenverlauf mit maximalem Minimalradius r* durch einen Stab mit homogener Brechzahlverteilung zur Veranschaulichung des nichtmessbaren Bereichs,

**Figur 4:** Diagramme mit unterschiedlichen Brechzahlverteilungen zur Veranschaulichung der Auswirkung eines Versatzes im Ursprung der zugrunde liegenden Ablenkwinkelverteilungen, und

**Figur 5** ein Diagramm mit einem aufbereiteten Brechzahlprofil n'(r) und einem durch Auswertung desselben modellierten hypothetischen Brechzahlprofil n*(r) für eine Vorform mit Stufenprofil.

Das erfindungsgemäße Verfahren dient zur Ermittlung eines Brechzahlprofils eines zylinderförmigen optischen Gegenstandes, wie zum Beispiel einer optischen Vorform. Das Brechzahlprofil einer Vorform kann nicht direkt gemessen werden; und wird daher indirekt als Ablenkung eines Lichtstrahls ermittelt, mit dem ein Volumenbereich der Vorform durchleuchtet wird. Aus der Ablenkung des austretenden Lichtstrahls kann auf die Brechzahlverteilung der Vorform zurückgeschlossen werden.

Die Messung der Ablenkwinkelverteilungen erfolgt mittels eines handelsüblichen Preform-Analyzers P-102 der Firma York Technology Ltd. Die übliche Arbeitswellenlänge des Geräts ist 632,8 nm, es können aber auch andere Wellenlängen verwendet werden. Das Gerät ermittelt die Ablenkwinkelverteilung weitgehend automatisch anhand der sogenannten Dynamik-Spatial-Filtering-Technik. Dabei wird das kollimierte Licht von der Vorform gebrochen und verlässt sie unter einem Ablenkwinkel $\psi$. Hinter der Vorform befindet sich eine sphärische Linse, die jeden Strahl mit Ablenkwinkel $\psi$ auf einen Punkt in einer Brennpunkteebene abbildet. Dort befindet sich eine rotierende Scheibe mit kreissektorförmigen Aussparung im Abstand R unter der optischen Achse. Die Vorform wird in einer mit Immersionsöl gefüllten Messzelle montiert, die mittels Schrittmotor in y-Richtung (senkrecht zur Hauptausbreitungsrichtung x des Messstrahls und senkrecht zur Höhenrichtung z) bewegt werden kann. In der Abbildungsebene ist eine Photodiode als Detektor platziert. Die Aussparung der rotierenden Scheibe wirkt wie eine Klinge, die von jenen Strahlen passiert werden kann, die eine ausreichende Brechung (Ablenkung) haben und die in der Abbildungsebene die räumliche Verteilung des Ablenkwinkels erzeugen. Der Preform Analyzer P-102 führt alle erforderlichen Berechnungen automatisch durch, so dass direkt das Daten-Array der Ablenkwinkelverteilung $\Psi(y)$ geplottet, ausgegeben und gespeichert werden kann.

Das Diagramm von **Figur 1** zeigt einen Ausschnitt einer typischen, so gemessenen Ablenkwinkelfunktion am Beispiel einer Vorform, bei der ein Kernstab aus undotiertem Quarzglas, von einer inneren Mantelschicht aus fluordotiertem Quarzglas und einer äußeren Mantelschicht aus wiederum undotiertem Quarzglas umhüllt ist. Der Ablenkwinkel $\Psi$ (in Grad) ist gegen die Position entlang der y-Achse (in mm) aufgetragen. Die mit "p=1" bezeichnete Kurve entspricht der Messkurve. Im Diagramm sind außerdem mehrere Spline-Funktionen für verschiedene Glättungsparameter p<1 eingetragen, die die Auswirkung der verschiedenen Glättungsstufen demonstrieren und die weiter unten noch näher erläutert werden.

Die Berechnung der Brechzahlverteilung n(r) aus der Ablenkwinkelverteilung erfolgt mittels Abel-Transformation (obige Gleichung 2). Im entsprechenden Diagramm von **Figur 2** ist die relative Brechzahl $n-n_o$ gegen den Radius r (in mm) aufgetragen. Die nur beispielhaft dargestellte Kurve wurde aus der gemessenen Ablenkwinkelverteilung (p=1) von Figur 1 mittels numerischer Integration berechnet. Der Kurvenverlauf im Bereich 21 repräsentiert den Kernstab, der im Bereich 22 die innere Mantelschicht und der im Bereich 23 die äußere Mantelschicht.

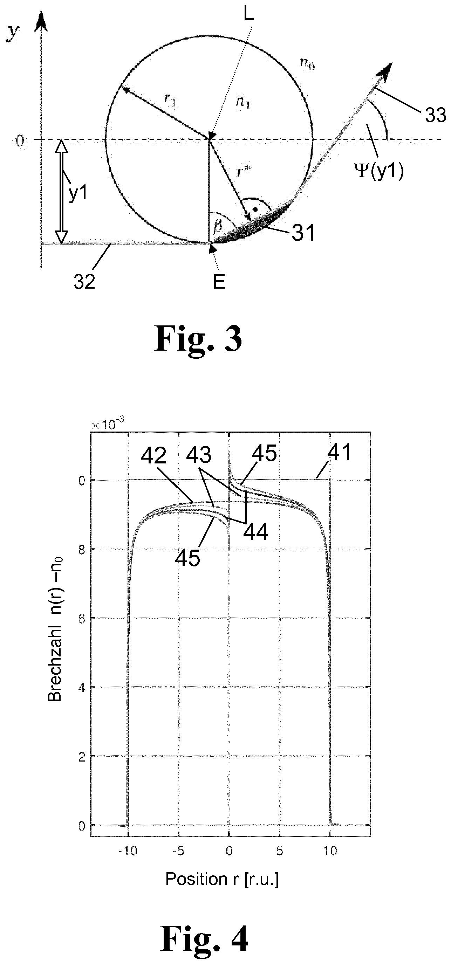

Diese Messergebnisse sind jedoch nicht korrekt. Einer der Gründe dafür ist das messmethodenbedingte Auftreten eines nicht-messbaren Bereichs bei einem Brechzahlsprung nach oben, wie er typisch ist für optische Fasern mit einer gegenüber der inneren Mantelschicht vergleichsweise höheren Brechzahl im Kern. Die Ursache des Fehlers ist in der Skizze von **Figur 3** an einem einfachen Fall veranschaulicht, nämlich einem Stab S mit homogener Brechzahlverteilung $n_1$, der in einer Index-Anpassungs-Flüssigkeit (Immersionsflüssigkeit) mit Brechzahl $n_0$ eingelegt ist, wobei $n_0$ kleiner ist als $n_1$. Beim Scannen des Stabes wird der an der Eintrittsstelle E tangential auftreffende Eintrittsstrahl 32 zum Zentrum des Stabes gebrochen und tritt als Austrittsstrahl 33 mit anderer Ausbreitungsrichtung wieder aus dem Stab aus, so dass sich ein Strahlenverlauf ergibt wie in Figur 3 dargestellt. Der Ablenkwinkel $\Psi(y1)$ ist definiert als Winkel zwischen Austrittsstrahl 33 und Eintrittsstrahl 32 für den im Abstand y1 zwischen der Zylinder-Längsachse L und dem Eintrittspunkt E eintretenden Eintrittsstrahls 32. Demnach gibt es einen Bereich 31, der bei dieser Messung nicht tangential durchleuchtet werden kann. Infolgedessen können im Bereich r*<r<r1 keine Ablenkwinkel gemessen werden und es zeigt

sich, dass infolge dessen der rekonstruierte Brechzahlwert niedriger ist als die reale Brechzahl.

Ziel der im Folgenden erläuterten Prozedur mit einer Auswertung und Modellierung der gemessenen Ablenkwinkelverteilung ist eine Kompensation dieses systematischen Messfehlers und eine weitgehende Rekonstruktion des realen Brechzahlprofil n(r).

Auswertung und Aufbereitung der gemessenen Ablenkwinkelverteilung

Zu Beginn der Auswertung werden die Positionen der Extrema $y_{k,max}$ der gemessenen Ablenkwinkelverteilung bestimmt. Dabei handelt es sich bereits näherungsweise um die Radien der einzelnen Schichten. Prinzipiell lassen sich die genauen Positionen auf der positiven und negativen y-Achse der Kernstabkante durch einfaches Ablesen per Hand bestimmen, insbesondere bei idealen, nicht verrauschten Daten.

Eine Ausführungsform des erfindungsgemäßen Verfahrens wird im Folgenden anhand **Figur 1** erläutert. Die dazu herangezogenen Messdaten entsprechen der Kurve "p=1". Damit sichergestellt wird, dass nicht fälschlicherweise die Kante auf ausgerissene Messpunkte oder durch Rauschen verursachte Nebenextrema gesetzt wird, wird zu Beginn die gemessene Ablenkwinkelverteilung mittels Spline-Funktionen stark geglättet.

Bei den Spline-Funktionen handelt es sich um mehrere zusammengesetzte Polynome höherer Ordnung, beispielsweise dritter Ordnung. Die Glättungsparameter "p" stellen beispielsweise einen Kompromiss dar zwischen

| p=1: | abschnittsweiser Fit kubischer Polynome |
|---|---|
| 0<p<1: | abschnittsweiser Fit eines geglätteten Kurvenverlaufs |
| p=0: | Fit einer Geraden |

Begonnen wird mit p=0,9, also einer starken Glättung. Von inneren nach außen, hin zu einer Kante, steigt der Ablenkwinkel betragsmäßig über einen weiten Bereich an. Der stark geglättete Ablenkwinkelverlauf zeigt in diesem Bereich, je nach Vorzeichen des Ablenkwinkels, ein Maximum oder Minimum. Einige wenige Ausreißer-Datenpunkte ergeben wenn überhaupt nur geringe Extrema. An dem stark geglätteten Verlauf werden die Extremwerte bestimmt. Danach erfolgt eine Glättung mit p=0,99 (weniger Glättung). Dieser Schritt wird wiederholt für p=0,999; p=0,9999; p=0,99999 und schließlich den ursprünglichen Messdaten (p=1), wobei schrittweise weniger Glättung erfolgt. In der sechsten und letzten Iteration (p=1) findet keinerlei Glättung mehr statt. Die Wahl von p=1 entspricht zwar der kubischen Interpolation, falls diese zum Auftragen jedoch gerade an den Stützstellen ausgewertet wird, ergeben sich gerade wieder die ursprünglichen Punkte. Dementsprechend repräsentiert der Kurvenverlauf p=1 einen Ausschnitt der gemessenen Daten.

Auf diese Art verschieben sich die zuvor anhand der starken Glättung bestimmten Extremwerte nach und nach bei jeder Iteration in Richtung der tatsächlichen Extrema der Ablenkwinkelverteilung und damit tendenziell auch in Richtung der realen Brechzahlkante. Die reale Position der Brechzahlkante wird somit durch den höchsten Glättungsparameter am besten angenähert. Die reale Kantenposition liegt bei einem Brechzahlsprung nach unten am Fuß des Maximums, und umgekehrt, bei einem Brechzahlsprung nach oben an der Spitze des Maximums.

Die aufgrund dieser Auswertung aufgefundenen innersten Extrema $y_{k,rechts}$ und $y_{k,links}$ der Ablenkwinkelverteilung werden bei der weiteren Auswertung eingesetzt, sie dienen insbesondere der Korrektur des Ursprungs der Ablenkwinkelverteilung Danach wird nochmals die ursprüngliche Ablenkwinkelverteilung mittels Spline-Funktionen, diesmal jedoch weniger stark mit p=0,99 geglättet.

Bevor die Transformation mittels Gleichung (2) durchgeführt wird, wird der Ursprung der Ablenkwinkelverteilung $\Psi(y)$ korrekt bestimmt. Insbesondere ist die y-Achse im Koordinatensystem der Winkelverteilung nur über die Geometrie der Messzelle festgelegt. Dabei muss das Zentrum der Messzelle nicht zwangsläufig mit dem der Vorform übereinstimmen, was zu einer Verschiebung in Richtung der y-Achse führt. Außerdem kann die gesamte Winkelverteilung einen Winkel-Offset mit einem Verschiebungsbeitrag in z-Richtung dieses Koordinatensystem haben. Dieser kann beispielsweise durch eine nicht exakte Referenzierung des Winkels der rotierenden Scheibe bei der Messeinrichtung verursacht werden.

**Figur 4** zeigt die Auswirkungen eines Versatzes im Ursprung der zugrunde liegenden Ablenkwinkelverteilungen auf die daraus berechnete Brechzahlverteilung. Dazu wurden mittels Gleichung (1) zwei aus 4401 Datenpunkten bestehende Verteilungen erstellt und anschließend die Berechnung durchgeführt. Profil 41 ist das angenommene Stufenprofil mit einem Brechzahlsprung $\Delta n = \pm 0{,}01$. Die übrigen Kurven zeigen Berechnungen des Brechzahlprofils, aufgetragen als Brechzahlunterschied $(n(r)-n_0)$ gegen die Position r in relativen Einheiten (r.u.):

Kurve 42:   aus einer korrekten Ablenkwinkelverteilung
Kurve 43:   eine Fehlpositionierung des Ursprungs in y-Richtung von 0,1 mm
Kurve 44:   eine Fehlpositionierung des Ursprungs mit einem Winkel-Offset von -0,02° ($\sim 3{,}5 \cdot 10^{-4}$ rad)
Kurve 45    mit beiden Verschiebungen zusammen.

Kurve 42 zeigt die Folgen eines typischen systematischen Fehlers bei der Umrechnung gemessener Ablenkwinkelverteilung in Brechzahlprofile. Das gesamte Brechzahl-Niveau liegt deutlich niedriger als das reale Niveau. Hinzu kommt eine Abrundung des Brechzahlprofils zur Kante hin. Die Kurven 43 bis 45 zeigen die Auswirkungen der Fehlpositionierung des Ursprungs.

Optische Vorformen sind im Wesentlichen radialsymmetrisch, so dass sich die zuvor bestimmten Kernstabkanten in der Ablenkwinkelverteilung besonders gut zur Bestimmung des Vorformmittelpunktes und somit des Koordinatenursprungs eignen. Falls nötig wird die y-Achse um die entsprechende Strecke verschoben, sodass der Ursprung genau in der Mitte zwischen besagten Kernstabkanten liegt.

Die Korrektur des Offsets wird durchgeführt, um die Ablenkwinkelverteilung entsprechend vertikal zu verschieben. Dazu wird eine Gerade mittels Summe-Kleinster-Quadrate-Methode an die Mitte zwischen innerstem rechtem Extremwert $y_{k,rechts}$ und innerstem linken Extremwert $y_{k,links}$ gefittet. Der zu fittende Bereich erstreckt sich über maximal 20% des Kernstabdurchmessers. Die Messdaten werden schließlich um den *y*-Achsen-Abschnitt der Geraden vertikal verschoben, so dass die Gerade durch den Ursprung verläuft.

Bei einer alternativen Verfahrensvariante zur Bestimmung des Offsets wird an die Mitte zwischen innerstem rechten Extremwert $y_{k,rechts}$ und innerstem linken Extremwert $y_{k,links}$ ein Polynom höherer Ordnung (beispielsweise 9. Ordnung) gefittet. Auch hier kann eine Teilstrecke zwischen den Kanten oder die Gesamtstrecke gewählt werden. Bei einer weiteren alternativen Verfahrensvariante zur Bestimmung des Offsets wird die Ablenkwinkelverteilung so verschoben, dass die Summe aller äquidistant gemessenen Ablenkwinkel gleich Null ist.

Ergebnis der Auswertung und Aufbereitung ist eine hinsichtlich ihres Ursprungs an den Koordinatenursprung angepasste, aufbereitete Ablenkwinkelverteilung $\Psi'(y)$.

In einem nächsten Schritt wird aus der aufbereiteten Ablenkwinkelverteilung $\Psi'(y)$ durch Abel-Transformation gemäß obiger Gleichung (2) ein aufbereitetes Brechzahlprofils n'(r) erzeugt. Wie anhand Figur 4 veranschaulicht, ist dabei die vorherige Anpassung des Ursprungs der Ablenkwinkelverteilung sehr hilfreich. Denn ohne diese würden bereits kleine Abweichungen vom tatsächlichen Ursprung zu Fehlern bei der transformierten Brechzahlverteilung führen.

Das aufbereitete Brechzahlprofil n'(r) gibt zwar nicht das real zu erwartende Brechzahlprofil der Vorform wieder. Jedoch stellt es eine anschauliche Orientierungshilfe dar, aus der sich in relativ eindeutiger Weise geeignete Orientierungswerte für ein "hypothetische Brechzahlprofil" n*(r) ableiten lassen, das Grundlage für den nachfolgenden Verfahrensschritt ist. Die abzuleitenden Orientierungswerte umfassen einen Orientierungswert $r^*_k$ für den Schichtradius und einen Orientierungswert $n^*_k$ für die Schichtbrechzahl des hypothetischen Brechzahlprofils n*(r). Insbesondere für die Brechzahl liegen häufig Erfahrungswerte und in Datenbanken niedergelegte Daten vor, die ergänzend zur Bestimmung der Brechzahl herangezogen werden können.

Bei dieser Auswertung werden auch die vorab ermittelten Extremwerte $y_{k,rechts}$ und $y_{k,links}$ zur Festlegung des Orientierungswerts $r^*_k$ genutzt. Da diese Positionen jedoch nur näherungsweise den Radien des Brechzahlprofils entsprechen, werden die ermittelten Extremwerte $y_{k,rechts}$ und $y_{k,links}$ in Schichtradien $r_{k,rechts}$ beziehungsweise in $r_{k,links}$ umgerechnet und die berechneten Schichtradien zur Festlegung des Orientierungswertes $r^*_k$ genutzt. Die Umrechnung der Extremwerte in den Schichtradius erfolgt dabei anhand der Gleichung (4) für den Fall, dass an der Grenzfläche bei $r_k$ keine Totalreflexion stattfindet, und sie erfolgt anhand Gleichung (5) für den Fall, dass an der Grenzfläche bei $r_k$ Totalreflexion stattfindet.

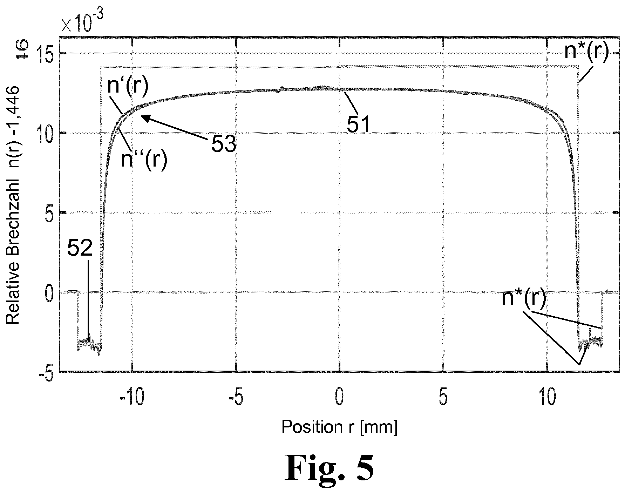

Im Diagramm von **Figur 5** sind für eine Vorform mit einem einfachen Stufenprofil ein aufbereitetes Brechzahlprofil n'(r) und ein durch Auswertung desselben modelliertes hypothetisches Brechzahlprofil n*(r) dargestellt. Der Brechungsindex ist angegeben als Relativwert bezogen auf die Brechzahl der Indexanpassungsflüssigkeit ($n_0 = 1{,}446$).

Das hypothetische Brechzahlprofil n*(r) gibt bereits das real zu erwartende Brechzahlprofil der Vorform wieder oder es kommt diesem Brechzahlprofil nahe. Es beruht auf dem aufbereiteten Brechzahlprofil n'(r) und den aus diesem Profil abgeleiteten Orientierungswerten, die wiederum Schätzwerte zu Brechzahl und Radien aus dem "nicht-messbaren Bereich" beinhalten.

Durch Umrechnung mit Gleichung (1) wird aus dem hypothetischen Brechzahlprofil n*(r) im nächsten Verfah-

rensschritt eine simulierte Ablenkwinkelverteilung $\Psi''(y)$ erzeugt. Die so erhaltene simulierte Ablenkwinkelverteilung $\Psi^*(y)$ beruht somit auf der Annahme eines Brechzahlprofils der Vorform (nämlich dem hypothetischen Brechzahlprofil $n^*(r)$), das sich wiederum nach Korrektur und Auswertung ursprünglicher Messwerte von einem aufbereiteten Brechzahlprofil $n'(r)$ ableitet.

Durch Transformation der simulierten Ablenkwinkelverteilung $\Psi''(y)$ anhand obiger Gleichung (2) wird wiederum ein simuliertes Brechzahlprofils $n''(r)$ erhalten, das in **Figur 5** mit dieser Bezeichnung eingetragen ist. Zwischen Mantelbereich 52 und Kernbereich 51 zeigt das Profil einen abgerundeten Bereich 53. Abgesehen von diesem abgerundeten Bereich 53 ist das simulierte Brechzahlprofil $n''(r)$ nahezu deckungsgleich mit dem aufbereiteten Brechzahlprofil $n'(r)$. In Anbetracht dessen, dass die angenommene Brechzahlverteilung $n^*(r)$ davon stark abweicht, ist dies beachtlich. Die Ähnlichkeit ist ein Hinweis darauf, dass die dem hypothetischen Brechzahlprofil $n^*(r)$ zugrunde liegenden Annahmen dem realen Brechzahlprofil $n(r)$ der Vorform bereits sehr nahe kommen, dass also das hypothetisehe Brechzahlprofil $n^*(r)$ in Figur 5 das reale Brechzahlprofil $n(r)$ genau oder zumindest ausreichend genau wiedergibt.

In der Praxis ist die exakte Übereinstimmung von simuliertem Brechzahlprofil $n''(r)$ und aufbereitetem Brechzahlprofil $n'(r)$ nicht erreichbar. Durch iteratives Anfitten des simulierten Brechzahlprofils $n''(r)$ an das aufbereitete Brechzahlprofil $n'(r)$ ist jedoch eine hinreichend und beliebig genaue Anpassung erzielbar.

Beim iterativen Anfitten werden die Parameter $r^*_k$ und $n^*_k$ so lange variiert, bis ein hinreichend genaues, angefittetes, simuliertes Brechzahlprofil $n''(r)_{fit}$ erhalten ist. Die dabei verwendeten Parameter $r^*_{k,fit}$ und $n^*_{k,fit}$ liegen dem entsprechenden hypothetischen Brechzahlprofil $n^*(r)$ zugrunde, das mit diesen Parametern somit gleichzeitig das rekonstruierte, reale Brechzahlprofil der Vorform darstellt.

Kriterium dafür, ob ein ausreichend angefittetes, simuliertes Brechzahlprofil $n^*(r)_{fit}$ vorliegt, ist das Minimum in der Abweichung zwischen dem simulierten Brechzahlprofil $n''(r)$ und dem aufbereiteten Brechzahlprofil $n'(r)$, die beispielsweise anhand der "Summe der Kleinsten absoluten Residuen" ermittelt wird.

Das erfindungsgemäße Messverfahren liefert auch bei einem komplexeren Brechzahlprofil einer Vorform mit acht Schichten ein gutes Ergebnis. Das Anfitten der Schichtparameter geschieht dabei vorzugsweise von der äußeren Schicht beginnend nach innen.

Beim oben erläuterten Modell zur Rekonstruktion des realen Brechzahlprofil der Vorform von Figur 5 wurden simulierte Brechzahlprofile $n''(r)$ an das aufbereitete Brechzahlprofil $n'(r)$ angefittet. Bei einer Abwandlung dieser Verfahrensweise zur Rekonstruktion wurden ergänzend gewichtete Parameter genutzt, die durch Betrachtung der Brechzahlebene aus dem angefitteten, simulierten Brechzahlprofil $n''(r)_{fit}$ einerseits, und durch Betrachtung der Winkelebene aufgrund der angefitteten, simulierten Ablenkwinkelverteilung $\Psi'^*(y)_{fit}$ andererseits erhalten werden. Dadurch werden zufällige Messwertschwankungen oder Umrechnungsfehler zusätzlich eliminiert und so bei der Rekonstruktion des realen Brechzahlprofils eine höhere Genauigkeit erzielt.

Dabei werden zusätzlich simulierte Ablenkwinkelverteilungen $\Psi^*(y)$ an die aufbereitete Ablenkwinkelverteilung $\Psi'(y)$ angefittet. Das Anfitten beruht dabei auf der iterativen Anpassung der Parameter $r^*_k$ und $n^*_k$. Diese Parametern werden so lange variiert, bis eine hinreichend genaue, angefittete, simulierte Ablenkwinkelverteilung $\Psi''(r)_{fit}$ erhalten ist. Die dabei verwendeten, optimal angepassten Parameter $r'^*_{k,fit}$ und $n'^*_{k,fit}$ liegen dem entsprechenden hypothetischen Brechzahlprofil $n^*(r)$ zugrunde, können sich aber von den optimal angepassten Parameterwerten $r^*_{k,fit}$ und $n^*_{k,fit}$ unterscheiden. Die so zusätzlich gewonnenen Informationen werden bei der Rekonstruktion des Brechzahlprofils zusätzlich berücksichtigt, indem das angefittete, simulierte Brechzahlprofil $n^*(r)_{fit}$ mit einer Gewichtung G=0,5 mit der angefitteten, simulierten Ablenkwinkelverteilung $\Psi'^*(y)_{fit}$ (ebenfalls G=0,5) kombiniert wird.

Um die Brechungsindices $n_k$ und Radien $r_k$ der einzelnen Schichten genauer bestimmen zu können, bietet sich ein Fit mittels kleinste-Quadrate-Methode oder der Methode der kleinsten absoluten Residuen an.

Das größte Problem besteht darin, dass die Fit-Funktion $n(r)$ keinen analytischen Ausdruck besitzt. Daher wird zum Erstellen der Fit-Funktion ein Umweg genommen. Innerhalb einer Iteration werden jedes Mal die Parameter $n_k$ und $r_k$ variiert, daraus eine Ablenkwinkelverteilung mittels Gleichung (1) erstellt, die Transformation mittels Gleichung (2) durchgeführt, um schließlich das erhaltene Profil $n(r)$ mittels kleinste-Quadrate-Kriterium oder mittels Methode der kleinsten absoluten Residuen mit der Brechzahlverteilung der Messung zu vergleichen. Die Berechnung der Transformation ist daher fester Bestandteil jeder Iteration, was die Rechenzeit verlängert.

Um ein Fitten innerhalb einer kürzeren Zeit gewährleisten zu können, können folgende Einschränkungen vorgenommen werden:

Korrektur des Ursprungs:

Durch die Ursprungskorrektur entfallen das Offset in $\Psi$-Richtung und der Versatz in y-Richtung, was ansonsten unabhängige Fit-Parameter wären. Die Anzahl an unabhängigen Fit-Parametern wird dadurch um zwei verringert.

<u>Seitenweises Fitten:</u>

Damit auch minimale Abweichungen innerhalb der Vorform bezüglich der Radialsymmetrie im Fit berücksichtigt werden, werden für die positive und negative y-Achse verschiedene Schichtparameter $n_k$ und $r_k$ innerhalb einer Schicht zugelassen. Der Fit lässt sich allerdings in zwei Fits mit jeweils nur halb so viel freien Fit-Parametern separieren, was mit einer erheblichen Reduzierung der benötigten Iterationen und somit einer Zeitersparnis einhergeht.

<u>Schichtweises Fitten:</u>

Ausgehend vom Grundgedanken des Aufteilens eines Fits mit vielen freien Parametern in mehrere Fits mit wenigen freien Parametern, lässt sich neben dem seitenweisen Fitten zusätzlich schichtweise Fitten. Hierbei muss allerdings berücksichtigt werden, dass die zu bestimmenden Parameter $n_k$ und $r_k$ von außen nach innen bestimmt werden müssen. Die Anzahl der betrachteten Schichten wird somit sukzessiv erhöht, ebenso wie der betrachtete Bereich des Fits schichtweise zunimmt. Zusammen mit dem zuvor erläuterten seitenweisen Fitten ergeben sich bei einer Vorform mit k Schichten 2 • k Fits mit jeweils 2 unbekannten, anstatt ein Fit mit 4 • k zu bestimmenden Parametern. Die benötigte Rechenzeit wird dadurch deutlich reduziert.

<u>Reduktion der Radien $r_k$</u> als freie Fit-Parameter:

Gemäß der Standard-Fitprozedur sind die Radien $r_k$ freie Fit-Parameter. Alternativ dazu lassen sich diese mittels der Gleichungen (4) und (5) parametrisieren. Dabei ist $n_0$ die Referenz-Brechzahl. Die anhand der oben erläuterten Methode bestimmten Extremwerte $y_{k,max}$ sind fixiert, so dass die Radien $r_k$ lediglich mit der Variation der Brechungsindices $n_k$ verändert werden können. Die benötigte Rechenzeit kann auf diese Weise in den Bereich von Sekunden reduziert werden.

**Patentansprüche**

1. Verfahren zur Ermittlung eines radialen Brechzahlprofils eines zylinderförmigen optischen Gegenstandes, der eine Zylinder-Längsachse aufweist, um die radialsymmetrisch mindestens eine Schicht k mit einem Schichtradius $r_k$ und mit einer Schichtbrechzahl $n_k$ verläuft, wobei eine Ablenkwinkelverteilung $\Psi(y)$ gemessen und daraus anhand eines Modells das Brechzahlprofil rekonstruiert wird, wobei der Ablenkwinkel "$\Psi$" definiert ist als der Winkel zwischen einem Austrittsstrahl aus dem optischen Gegenstand und einem Eintrittsstrahl in den optischen Gegenstand, in der Ebene senkrecht zur Längsachse umfassend den Eingangsstrahl und den Ausgangsstrahl, und wobei "y" definiert ist als der senkrechte Abstand, in der Ebene senkrecht zur Längsachse umfassend den Eingangsstrahl und den Ausgangsstrahl, der zwischen dem Eintrittspunkt des Eintrittsstrahls in den optischen Gegenstand und einer Linie parallel zum Eingangstrahl, die durch die Längsachse läuft, wobei das Modell folgende Maßnahmen umfasst:

   (a) Aufbereitung der gemessenen Ablenkwinkelverteilung $\Psi(y)$, umfassend eine Extremwertbestimmung der Ablenkwinkelverteilung, wobei eine aufbereitete Ablenkwinkelverteilung $\Psi'(y)$ erhalten wird,
   (b) Transformation der aufbereiteten Ablenkwinkelverteilung $\Psi'(y)$ zu einem aufbereiteten Brechzahlprofil $n'(r)$,
   (c) Auswertung des aufbereiteten Brechzahlprofils $n'(r)$ zur Festlegung von Orientierungswerten, umfassend einen Orientierungswert $r^*_k$ für den Schichtradius und einen Orientierungswert $n^*_k$ für die Schichtbrechzahl eines hypothetischen Brechzahlprofils $n^*(r)$,
   (d) Erzeugen einer simulierten Ablenkwinkelverteilung $\Psi''(y)$ auf Basis des hypothetischen Brechzahlprofils $n^*(r)$ mit den Orientierungswerten $r^*_k$ und $n^*_k$, und Transformation dieser Ablenkwinkelverteilung in ein simuliertes Brechzahlprofil $n''(r)$, und
   (e) Anfitten des simulierten Brechzahlprofils $n''(r)$ an das aufbereitete Brechzahlprofil $n'(r)$ durch iteratives Anpassen der Parameter $r^*_k$ und $n^*_k$ bei Maßnahme (d), wobei ein angefittetes, simuliertes Brechzahlprofil $n^*(r)_{fit}$ erhalten wird, das durch angepasste Parameter $r^*_{k,fit}$ und $n^*_{k,fit}$ definiert ist, und
   (f) Erhalten des Brechzahlprofils als das hypothetische Brechzahlprofil mit den angepassten Parametern $r^*_{k,fit}$ und $n^*_{k,fit}$.

2. Verfahren nach Anspruch 1, **dadurch gekennzeichnet, dass** die Extremwertbestimmung von Maßnahme (a) eine Glättung der gemessenen Ablenkwinkelverteilung mittels Spline-Funktion unter Einsatz mehrerer unterschiedlicher Glättungsparameter.

3. Verfahren nach Anspruch 2, **dadurch gekennzeichnet, dass** bei der Extremwertbestimmung eine innerster rechter Extremwert $y_{k,rechts}$ und ein innerster linker Extremwert $y_{k,links}$ ermittelt werden.

4. Verfahren nach Anspruch 3, **dadurch gekennzeichnet, dass** bei der Auswertung des aufbereiteten Brechzahlprofils n'(r) gemäß Maßnahme (c) die ermittelten Extremwerte $y_{k,rechts}$ und $y_{k,links}$ zur Festlegung des Orientierungswertes $r^*_k$ genutzt werden.

5. Verfahren nach Anspruch 2, **dadurch gekennzeichnet, dass** die ermittelten Extremwerte $y_{k,rechts}$ und $y_{k,links}$ in Schichtradien $r_{k,rechts}$ beziehungsweise in $r_{k,links}$ umgerechnet werden und die Schichtradien zur Festlegung des Orientierungswertes $r^*_k$ genutzt werden.

6. Verfahren nach einem der vorhergehenden Ansprüche, **dadurch gekennzeichnet, dass** die Aufbereitung der gemessenen Ablenkwinkelverteilung eine Korrektur umfasst, bei der der Ursprung der Ablenkwinkelverteilung justiert wird.

7. Verfahren nach Anspruch 5 und einem der 3 oder 4, **dadurch gekennzeichnet, dass** das Justieren des Ursprungs der Ablenkwinkelverteilung eine Verschiebung in Richtung einer y-Achse des Koordinatensystems in die Mitte zwischen innerstem rechten Extremwert $y_{k,rechts}$ und innerstem linken Extremwert $y_{k,links}$ des Brechzahlprofils umfasst.

8. Verfahren nach Anspruch 5 oder 6, **dadurch gekennzeichnet, dass** das Justieren des Ursprungs der Ablenkwinkelverteilung eine Verschiebung um einen Offset in Richtung einer z-Achse des Koordinatensystems umfasst, wobei der Offset berechnet wird als Positionsunterscheid zwischen der Null-Linie des Koordinatensystems und einer Geraden, die mittels Summe-kleinster-Quadrate-Methode an die in die Mitte zwischen innerstem rechten Extremwert $y_{k,rechts}$ und innerstem linken Extremwert $y_{k,links}$ gefittet wird.

9. Verfahren nach einem der vorhergehenden Ansprüche, **dadurch gekennzeichnet, dass** die Transformation des aufbereiteten Brechzahlprofils n'(r) gemäß Maßnahme (b) anhand einer Abel-Transformation erfolgt.

10. Verfahren nach einem der vorhergehenden Ansprüche, **dadurch gekennzeichnet, dass** ein angefittetes, simuliertes Brechzahlprofil n*(r)$_{fit}$ vorliegt, wenn die Abweichung zwischen dem simulierten Brechzahlprofil n"(r) und dem aufbereiteten Brechzahlprofil n'(r) - berechnet anhand der "Kleinsten absoluten Residuen" oder anhand der "Kleinste-Quadrate-Methode" unterhalb eines vorgegeben Schwellwertes liegt.

11. Verfahren nach einem der vorhergehenden Ansprüche, **dadurch gekennzeichnet, dass** ergänzend zum Anfitten des simulierten Brechzahlprofils n"(r) an das aufbereitete Brechzahlprofil n'(r) gemäß Verfahrensschritt (e) zusätzlich die simulierte Ablenkwinkelverteilung $\Psi^*(y)$ an die aufbereitete Ablenkwinkelverteilung $\Psi'(y)$ durch iteratives Anpassen der Parameter $r^*_k$ und $n^*_k$ bei Maßnahme (d) gefittet wird, wobei eine angefittete, simulierte Ablenkwinkelverteilung $\Psi'^*(y)_{fit}$ erhalten wird, die durch angepasste Parameter $r'^*_{k,fit}$ und $n'^*_{k,fit}$ definiert ist, und wobei das Brechzahlprofil gemäß Verfahrensschritt (f) erhalten wird, indem das angefittete, simulierte Brechzahlprofil n*(r)$_{fit}$ mit einem Gewichtungsfaktor G mit der angefitteten, simulierten Ablenkwinkelverteilung $\Psi'^*(y)_{fit}$ mit einem Gewichtungsfaktor (1-G) kombiniert wird, wobei gilt $0 \leq G \leq 1$.

12. Verfahren nach einem der vorhergehenden Ansprüche, **dadurch gekennzeichnet, dass** die bei der Rekonstruktion des realen Brechzahlprofils n(r) ermittelten Parameter, insbesondere die angepassten Parameter $r^*_{k,fit}$ und $n^*_{k,fit}$, zur Anpassung eines Vorform-Fertigungsprozesses verwendet werden.

## Claims

1. Method for determining a radial refractive-index profile of a cylindrical optical object which has a cylinder longitudinal axis around which at least one layer k with a layer radius $r_k$ and with a layer refractive index $n_k$ extends radially symmetrically, wherein a deflection angle distribution $\Psi(y)$ is measured and the refractive index profile is reconstructed therefrom on the basis of a model, wherein the deflection angle $\Psi$ is defined as the angle between an exit beam from the optical object and an entry beam into the optical object in a plane perpendicular to the longitudinal axis comprising the exit beam and the entry beam, and wherein "y" in the plane comprising the exit beam and the entry beam is defined as the distance between the entry point of the entry beam into the optical object and a line parallel to the entry beam passing through the longitudinal axis, said model comprising the following measures:

   (a) preparing the measured deflection angle distribution $\Psi(y)$, including an extreme value determination of the deflection angle distribution, wherein a prepared deflection angle distribution $\Psi'(y)$ is obtained,

(b) transforming the prepared deflection angle distribution $\Psi'(y)$ into a prepared refractive-index profile n'(r),

(c) evaluating the prepared refractive-index profile n'(r) for the fixation of orientation values, comprising an orientation value $r^*_k$ for the layer radius and an orientation value $n^*_k$ for the layer refractive index of a hypothetical refractive-index profile n*(r),

(d) generating a simulated deflection angle distribution $\Psi''(y)$ on the basis of the hypothetical refractive-index profile n*(r) with the orientation values $r^*_k$ and $n^*_k$, and transforming said deflection angle distribution into a simulated refractive-index profile n''(r), and

(e) fitting the simulated refractive index profile n''(r) to the prepared refractive-index profile n'(r) by iterative adaptation of the parameters $r^*_k$ and $n^*_k$, wherein a fitted, simulated refractive-index profile $n^*(r)_{fit}$ is obtained, which is defined by adapted parameters $r^*_{k,fit}$ and $n^*_{k,fit}$, and

(f) obtaining the refractive index profile as the hypothetical refractive-index profile with the adapted parameters $r^*_{k,fit}$ and $n^*_{k,fit}$.

2. The method according to claim 1, **characterized in that** the extreme value determination according to measure (a) is a smoothing of the measured deflection angle distribution by means of a spline function using several different smoothing parameters.

3. The method according to claim 2, **characterized in that** in the extreme value determination an innermost right extreme value $y_{k,right}$ and an innermost left extreme value $y_{k,left}$ are determined.

4. The method according to claim 3, **characterized in that** in the evaluation of the prepared refractive-index profile n'(r) according to measure (c) the determined extreme values $y_{k,right}$ and $y_{k,left}$ are used for the fixation of the orientation value $r^*_k$.

5. The method according to claim 2, **characterized in that** the determined extreme values $y_{k,right}$ and $Y_{k,left}$ are converted into layer radii $r_{k,right}$ and into $r_{k,left}$, respectively, and the layer radii are used for the fixation of the orientation value $r^*_k$.

6. The method according to any one of the preceding claims, **characterized in that** the preparation of the measured deflection angle distribution comprises a correction in which the origin of the deflection angle distribution is adjusted.

7. The method according to claim 5 and one of 3 or 4, **characterized in that** the adjustment of the origin of the deflection angle distribution comprises a shifting in the direction of a y-axis of the coordinate system into the middle between innermost right extreme value $y_{k,right}$ and innermost left extreme value $y_{k,left}$ of the refractive index profile.

8. The method according to claim 5 or 6, **characterized in that** the adjustment of the origin of the deflection angle distribution comprises a shifting about an offset in the direction of a z-axis of the coordinate system, wherein the offset is calculated as a positional difference between the zero line of the coordinate system and a straight line which with the help of the sum of least squares method is fitted to the middle between innermost right extreme value $y_{k,right}$ and innermost left extreme value $y_{k,left}$.

9. The method according to any one of the preceding claims, **characterized in that** the transformation of the prepared refractive-index profile n'(r) according to measure (b) is carried out on the basis of an Abel transform.

10. The method according to any one of the preceding claims, **characterized in that** a fitted, simulated refractive-index profile $n^*(r)_{fit}$ is present when the deviation between the simulated refractive-index profile n''(r) and the prepared refractive-index profile n'(r) - calculated on the basis of the "least absolute residuals" or on the basis of the "least squares method" - is below a predetermined threshold value.

11. The method according to any one of the preceding claims, **characterized in that** in addition to the fitting of the simulated refractive-index profile n''(r) to the prepared refractive-index profile n'(r) according to method step (e) the simulated deflection angle distribution $\Psi^*(y)$ is additionally fitted to the prepared deflection angle distribution $\Psi'(y)$ by iterative adaption of the parameters $r^*_k$ and $n^*_k$ in the step of measure (d), wherein a fitted, simulated deflection angle distribution $\Psi'^*(y)_{fit}$ is obtained which is defined by adapted parameters $r'^*_{k,fit}$ and $n'^*_{k,fit}$, and wherein the refractive index profile according to method step (f) is obtained **in that** the fitted, simulated refractive-index profile $n^*(r)_{fit}$ with a weighting factor G is combined with the fitted, simulated deflection angle distribution $\Psi'^*(y)_{fit}$ with a weighting factor (1-G), wherein $0 \leq G \leq 1$.

**12.** The method according to any one of the preceding claims, **characterized in that** the parameters determined in the reconstruction of the real refractive-index profile n(r), in particular the adapted parameters $r^*_{k,fit}$ and $n^*_{k,fit}$, are used for the adaptation of a preform manufacturing process.

**Revendications**

**1.** Procédé de détermination d'un profil d'indice de réfraction radial d'un objet optique cylindrique qui comporte un axe longitudinal de cylindre autour duquel s'étend en symétrie radiale au moins une couche k avec un rayon de couche $r_k$ et un indice de réfraction de couche $n_k$, dans lequel on mesure une distribution de l'angle de déflection $\psi(y)$ à partir de laquelle le profil d'indice de réfraction est reconstruit au moyen d'un modèle, l'angle de déflection « $\Psi'$ » étant défini comme l'angle entre un faisceau qui sort de l'objet optique et un faisceau qui entre dans l'objet optique, dans le plan perpendiculaire à l'axe longitudinal comprenant le faisceau d'entrée et le faisceau de sortie et « y » étant défini comme la distance verticale, dans le plan perpendiculaire à l'axe longitudinal comprenant le faisceau d'entrée et le faisceau de sortie, qui s'étend entre le point d'entrée du faisceau d'entrée dans l'objet optique et une ligne parallèle au faisceau d'entrée, qui passe à travers l'axe longitudinal, le modèle comportant les mesures suivantes :

(a) traitement de la distribution de l'angle de déflection $\Psi(y)$ mesurée, comprenant une détermination de la valeur extrême de la distribution de l'angle de déflection, une distribution de l'angle de déflection $\Psi'(y)$ traitée étant obtenue,

(b) transformation de la distribution de l'angle de déflection $\Psi'(y)$ traitée en un profil d'indice de réfraction n'(r) traité,

(c) évaluation du profil d'indice de réfraction n'(r) traité pour définir des valeurs indicatives, comprenant une valeur indicative $r^*_k$ pour le rayon de la couche et une valeur indicative $n^*_k$ pour l'indice de réfraction de la couche d'un profil d'indice de réfraction n*(r) hypothétique,

(d) génération d'une distribution de l'angle de déflection $\Psi''(y)$ simulée sur la base du profil d'indice de réfraction n*(r) hypothétique avec les valeurs indicatives $r^*_k$ et $n^*_k$, et transformation de cette distribution de l'angle de déflection en un profil d'indice de réfraction n''(r) simulé, et

(e) ajustage du profil d'indice de réfraction n''(r) simulé au profil d'indice de réfraction n'(r) traité par une adaptation itérative des paramètres $r^*_k$ et $n^*_k$ dans le cadre de la mesure (d), un profil d'indice de réfraction $n^*(r)_{fit}$ simulé et ajusté, qui est défini par les paramètres adaptés $r^*_{k,fit}$ et $n^*_k$,fit, étant obtenu et

(f) obtention du profil d'indice de réfraction en tant que profil d'indice de réfraction hypothétique avec les paramètres adaptés $r^*_{k,fit}$ et $n^*_{k,fit}$.

**2.** Procédé selon la revendication 1, **caractérisé en ce que** la détermination de valeurs extrêmes lors de la mesure (a) implique un lissage de la distribution de l'angle de déflection mesurée au moyen de la fonction spline en utilisant plusieurs paramètres de lissage différents.

**3.** Procédé selon la revendication 2, **caractérisé en ce que** lors de la détermination de valeurs extrêmes, une valeur extrême droite la plus centrale yk,rechts et une valeur extrême gauche la plus centrale yk,links sont déterminées.

**4.** Procédé selon la revendication 3, **caractérisé en ce que** dans le cadre de l'évaluation du profil d'indice de réfraction n'(r) traité conformément à la mesure (c), les valeurs extrêmes yk,rechts et yk,links déterminées sont utilisées pour définir la valeur indicative $r^*_k$.

**5.** Procédé selon la revendication 2, **caractérisé en ce que** les valeurs extrêmes yk,rechts et yk,links déterminées sont converties en rayons de couche rk,rechts voire rk,links et **en ce que** les rayons de couche sont utilisés pour définir la valeur indicative $r^*_k$.

**6.** Procédé selon l'une quelconque des revendications précédentes, **caractérisé en ce que** le traitement de la distribution de l'angle de déflection mesurée comporte une correction lors de laquelle l'origine de la distribution de l'angle de déflection est réglée.

**7.** Procédé selon la revendication 5 et l'une quelconque des revendications 3 ou 4, **caractérisé en ce que** le réglage de l'origine de la distribution de l'angle de déflection comprend un décalage en direction d'un axe y du système de coordonnées au milieu entre la valeur extrême droite la plus centrale yk,rechts et la valeur extrême gauche la plus centrale yk,links du profil d'indice de réfraction.

8. Procédé selon la revendication 5 ou 6, **caractérisé en ce que** le réglage de l'origine de la distribution de l'angle de déflection comprend un décalage (offset) en direction d'un axe z du système de coordonnées, ledit décalage étant calculé en tant que différence de position entre la ligne zéro du système de coordonnées et une droite qui est ajustée au moyen de la méthode des moindres carrés au milieu entre la valeur extrême droite la plus centrale $y_{k,rechts}$ et la valeur extrême gauche la plus centrale $y_{k,links}$.

9. Procédé selon l'une quelconque des revendications précédentes, **caractérisé en ce que** la transformation du profil d'indice de réfraction n'(r) est effectuée conformément à la mesure (b) au moyen d'une transformation d'Abel.

10. Procédé selon l'une quelconque des revendications précédentes, **caractérisé en ce qu'**il existe un profil d'indice de réfraction $n^*(r)_{fit}$ simulé et ajusté lorsque la différence entre le profil d'indice de réfraction"(r) simulé et le profil d'indice de réfraction n'(r) traité - calculée au moyen de la « méthode des moindres résidus absolus » ou de la « méthode des moindres carrés » - se situe en-dessous d'une valeur seuil prédéfinie.

11. Procédé selon l'une quelconque des revendications précédentes, **caractérisé en ce que**, complémentaire à l'ajustage du profil d'indice de réfraction n"(r) simulé au profil d'indice de réfraction n'(r) traité conformément à l'étape de procédé (e), la distribution de l'angle de déflection $\Psi^*(y)$ simulée est également ajustée à la distribution de l'angle de déflection $\psi'(y)$ traitée par une adaptation itérative des paramètres $r^*k$ et $n^*k$ dans le cadre de la mesure (d), une distribution de l'angle de déflection $\Psi^*(y)fit$ simulée et ajustée, qui est définie par les paramètres adaptés $r'^*k,fit$ et $n'^*k,fit$, étant obtenue, et le profil d'indice de réfraction étant obtenu conformément à l'étape de procédé (f), par combinaison du profil d'indice de réfraction $n^*(r)_{fit}$ simulé et ajusté et d'un facteur de pondération G avec la distribution de l'angle de déflection $\Psi'^*(y)fit$ simulée et ajustée avec un facteur de pondération (1-G), la règle étant $0 \leq G \leq 1$.

12. Procédé selon l'une quelconque des revendications précédentes, **caractérisé en ce que** les paramètres déterminée lors de la reconstruction du profil d'indice de réfraction n(r) réel, en particulier les paramètres adaptés $r^*k,fit$ et $n^*k,fit$, sont utilisés pour adapter un processus de fabrication de préformes.

**Fig. 1**

**Fig. 2**

**Fig. 3**

**Fig. 4**

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4227806 A
- US 4441811 A
- US 4744654 A
- US 5078488 A
- US 4515475 A
- US 8013985 B2
- US 2010245805 A1

**In der Beschreibung aufgeführte Nicht-Patentliteratur**

- Concurrent three-dimensional characterization of the refractive-index and residual-stress distributions in optical fibers. **MICHAEL R. HUTSEL ; THOMAS K. GAYLORD.** APPLIED OPTICS. OPTICAL SOCIETY OF AMERICA, 01. August 2012, vol. 51, 5442-5452
- Nondestructive Measurement for Arbitrary RIP Distribution of Optical Fiber Preforms. **FLEMING S. et al.** JOURNAL OF LIGHTWAVE TECHNOLOGY. IEEE SERVICE CENTER, 01. Februar 2004, vol. 22, 478-486
- **WERNER J. GLANTSCHNIG.** Index profile reconstruction of fiber preforms from data containing a surface refraction component. *Applied Optics,* Juli 1990, vol. 29 (19), 2899-2907